# EUROPÄISCHE PATENTANMELDUNG

(11) **EP 3 338 916 A1**
(43) Veröffentlichungstag der Anmeldung: **27.06.2018**
(21) Anmeldenummer: 16206210.3
(22) Anmeldetag: 22.12.2016
(51) Int. Cl.: B22F 3/105, B28B 1/00

(54) **VERFAHREN ZUR SCHICHTWEISEN FERTIGUNG EINES BAUTEILS AUS PULVERFÖRMIGEM WERKSTOFF**

(71) Anmelder: HILTI Aktiengesellschaft, 9494 Schaan (LI)
(72) Erfinder: Zivcec, Maria, 9470 Buchs (CH); Schneider, Roland, 6824 Schlins (AT); Spring, Robert, 9467 Fruemsen (CH)
(74) Vertreter: Hilti Aktiengesellschaft Corporate Intellectual Property

(57) **Zusammenfassung**

Verfahren zur schichtweisen Fertigung eines Bauteils (10) aus pulverförmigem Werkstoff mit losen Pulverpartikeln basierend auf dreidimensionalen Daten des Bauteils (10), mit den Verfahrensschritten:
▪ das Bauteil (10) wird in einer Aufbaurichtung (16) in N, N ≥ 2 aufeinanderfolgende zylinderförmige Querschnittsbereiche (11, 12, 13, 14, 15) aus einer zweidimensionalen Querschnittsfläche und einer Schichtdicke zerlegt,
▪ auf eine Aufbauebene senkrecht zur Aufbaurichtung (16) werden N Pulverschichten des pulverförmigen Werkstoffs aufgebracht,
▪ die losen Pulverpartikel in den Querschnittsbereichen (11, 12, 13, 14, 15) des Bauteils (10) werden zumindest teilweise miteinander und mit dem darunter liegenden Querschnittsbereich verbunden und
▪ während der schichtweisen Fertigung des Bauteils (10) werden lose Pulverpartikel, die innerhalb eines Querschnittsbereichs oder innerhalb mehrerer in Aufbaurichtung (16) aufeinanderfolgender Querschnittsbereiche angeordnet sind, zumindest teilweise aus dem Bauteil (10) entfernt.

## Beschreibung

### Technisches Gebiet

Die vorliegende Erfindung betrifft ein Verfahren zur schichtweisen Fertigung eines Bauteils aus pulverförmigem Werkstoff gemäß dem Oberbegriff des Anspruchs 1.

### Stand der Technik

Abrasive Bearbeitungswerkzeuge, wie Bohrkronen, Sägeblätter, Trennscheiben oder Schleifscheiben, umfassen Bearbeitungssegmente, die an einem rohr- oder scheibenförmigen Grundkörper befestigt werden. Abhängig vom Bearbeitungsverfahren des abrasiven Bearbeitungswerkzeugs werden die Bearbeitungssegmente als Bohrsegmente, Sägesegmente, Trennsegmente oder Schleifsegmente bezeichnet und unter dem Begriff "Bearbeitungssegmente" zusammengefasst. Die Bearbeitungssegmente werden aus pulverförmigem Werkstoff und Schneidelementen in Form von Hartstoffpartikeln aufgebaut. Dabei wird zwischen Bearbeitungssegmenten mit statistisch verteilten Hartstoffpartikeln und Bearbeitungssegmenten mit definiert angeordneten Hartstoffpartikeln unterschieden. Bei Bearbeitungssegmenten mit statistisch verteilten Hartstoffpartikeln werden der pulverförmige Werkstoff und die Hartstoffpartikel gemischt und in eine passende Werkzeugform eingefüllt und zunächst durch Kaltpressen zu einem Grünling geformt. Bei Bearbeitungssegmenten mit definiert angeordneten Hartstoffpartikeln wird der Grünling schichtweise aus pulverförmigem Werkstoff aufgebaut, in den die Hartstoffpartikel an definierten Positionen platziert werden. Die Grünlinge werden bei statistisch verteilten Hartstoffpartikeln und definiert angeordneten Hartstoffpartikeln durch Heißpressen und/oder Sintern zu einsatzfähigen Bearbeitungssegmenten verdichtet.

Bearbeitungssegmente mit statistisch verteilten Hartstoffpartikeln weisen mehrere Nachteile auf: Da sich die Hartstoffpartikel auch an der Oberfläche der Grünlinge befinden, weisen die zum Kaltpressen der Grünlinge notwendigen Werkzeugformen einen hohen Verschleiß auf. Außerdem entspricht die Verteilung der Hartstoffpartikel im Grünling nicht der anwendungstechnisch optimalen Verteilung. Die Nachteile von Bearbeitungssegmenten mit statistisch verteilten Hartstoffpartikeln führen dazu, dass für hochwertige Bearbeitungswerkzeuge trotz der höheren Kosten überwiegend Bearbeitungssegmente mit definiert angeordneten Hartstoffpartikeln eingesetzt werden.

EP 0 452 618 A1 beschreibt ein bekanntes Verfahren zur schichtweisen Fertigung eines Grünlings aus pulverförmigem Werkstoff mit Hartstoffpartikeln, die an definierten Positionen im pulverförmigen Werkstoff angeordnet werden. Das bekannte Verfahren basiert auf dreidimensionalen Daten des Grünlings und weist folgende Verfahrensschritte auf:
▪ der Grünling wird in einer Aufbaurichtung in N, N ≥ 2 aufeinanderfolgende zylinderförmige Querschnittsbereiche zerlegt, wobei jeder Querschnittsbereich aus einer zweidimensionalen Querschnittsfläche senkrecht zur Aufbaurichtung und einer Schichtdicke parallel zur Aufbaurichtung gebildet wird,
▪ auf eine Aufbauebene, die senkrecht zur Aufbaurichtung angeordnet ist, werden N, N ≥ 2 Pulverschichten des pulverförmigen Werkstoffs aufgebracht und
▪ die Hartstoffpartikel werden an den definierten Positionen im pulverförmigen Werkstoff angeordnet.

Die Hartstoffpartikel werden mittels einer Saugplatte aufgenommen und über dem Schichtaufbau positioniert. Durch eine Reduzierung der Ansaugkraft oder durch einen kurzen Druckluftstoß lösen sich die Hartstoffpartikel aus der Saugplatte und werden in die obere Pulverschicht des Schichtaufbaus platziert. Der Druckluftstoß darf nur so groß sein, dass der pulverförmige Werkstoff nicht verschoben wird und die Hartstoffpartikel an den vorgesehenen definierten Positionen der Verteilung angeordnet werden. Ein weiterer Nachteil besteht darin, dass die Hartstoffpartikel nur lose auf oder in der oberen Pulverschicht angeordnet sind. Beim Auftragen und Verteilen der nächsten Pulverschicht des pulverförmigen Werkstoffs mit Hilfe eines Auftragswerkzeugs in Form einer Rolle, eines Rakels oder einer Bürste können die Hartstoffpartikel vom Auftragswerkzeug aus ihren definierten Positionen verschoben werden und somit die Genauigkeit reduziert werden.

Neben der schichtweisen Fertigung von Grünlingen für Bearbeitungssegmente sind Verfahren zur schichtweisen Fertigung von Bauteilen aus pulverförmigem Werkstoff bekannt. Die bekannten Verfahren zur schichtweisen Fertigung eines Bauteils aus pulverförmigem Werkstoff mit losen Pulverpartikeln basieren auf dreidimensionalen Daten des Bauteils und weisen folgende Verfahrensschritte auf:
▪ das Bauteil wird in einer Aufbaurichtung in N, N ≥ 2 aufeinanderfolgende zylinderförmige Querschnittsbereiche zerlegt, wobei jeder Querschnittsbereich aus einer zweidimensionalen Querschnittsfläche senkrecht zur Aufbaurichtung und einer Schichtdicke parallel zur Aufbaurichtung gebildet wird,
▪ auf eine Aufbauebene senkrecht zur Aufbaurichtung wird eine erste Pulverschicht des pulverförmigen Werkstoffs aufgebracht,
▪ die losen Pulverpartikel der ersten Pulverschicht werden im ersten Querschnittsbereich des Bauteils zumindest teilweise miteinander verbunden,
▪ auf die Aufbauebene werden in Aufbaurichtung des Bauteils nacheinander weitere Pulverschichten des pulverförmigen Werkstoffs aufgebracht und
▪ in jeder weiteren Pulverschicht werden die losen Pulverpartikel im jeweiligen Querschnittsbereich des Bauteils zumindest teilweise miteinander und mit dem darunter liegenden Querschnittsbereich des Bauteils verbunden.

### Darstellung der Erfindung

Die Aufgabe der vorliegenden Erfindung besteht darin, die Integration von Einsatzelementen in schichtweise gefertigte Bauteile zu verbessern. Dabei soll die Integration der Einsatzelemente weitgehend automatisiert während der schichtweisen Fertigung des Bauteils erfolgen und die Einsatzelemente sollen mit einer hohen Genauigkeit in das Bauteil integriert werden.

Diese Aufgabe wird bei dem eingangs genannten Verfahren zur schichtweisen Fertigung eines Bauteils aus pulverförmigem Werkstoff erfindungsgemäß durch die Merkmale des unabhängigen Anspruchs 1 gelöst. Vorteilhafte Weiterbildungen sind in den abhängigen Ansprüchen angegeben.

Das Verfahren zur schichtweisen Fertigung eines Bauteils aus pulverförmigem Werkstoff ist erfindungsgemäß dadurch gekennzeichnet, dass während der schichtweisen Fertigung des Bauteils lose Pulverpartikel, die innerhalb eines Querschnittsbereichs oder innerhalb mehrerer in Aufbaurichtung aufeinanderfolgender Querschnittsbereiche angeordnet sind, zumindest teilweise aus dem Bauteil entfernt werden. Das Entfernen der losen Pulverpartikel aus dem Bauteil kann beispielsweise durch Absaugen oder Ausblasen erfolgen. Dadurch, dass während der schichtweisen Fertigung des Bauteils lose Pulverpartikel zumindest teilweise aus dem Bauteil entfernt werden, können im Bauteil Kavitäten oder Stützstrukturen erzeugt werden, in die Einsatzelemente eingesetzt werden können. Die Einsatzelemente werden während der schichtweisen Fertigung des Bauteils in das Bauteil integriert.

Bauteile, die mittels des erfindungsgemäßen Verfahrens schichtweise gefertigt werden, bestehen aus mehreren aufeinanderfolgenden zylinderförmigen Querschnittsbereichen mit einer zweidimensionalen Querschnittsfläche senkrecht zur Aufbaurichtung und einer Schichtdicke parallel zur Aufbaurichtung, wobei die Querschnittsbereiche als gerade Zylinder mit einer beliebigen Querschnittsfläche ausgebildet sind. Die äußere Mantelfläche der zylinderförmigen Querschnittsbereiche trennt den Bereich "innerhalb des Bauteils" von dem Bereich "außerhalb des Bauteils" ab. Lose Pulverpartikel, die während der schichtweisen Fertigung des Bauteils innerhalb der äußeren Mantelfläche eines Querschnittsbereichs oder innerhalb der äußeren Mantelflächen mehrerer Querschnittsbereiche angeordnet sind, werden während der schichtweisen Fertigung zumindest teilweise aus dem Bauteil entfernt.

Das erfindungsgemäße Verfahren zur schichtweisen Fertigung eines Bauteils ist für pulverförmige Werkstoffe, die auch als Werkstoffpulver bezeichnet werden, geeignet. Unter dem Begriff "pulverförmige Werkstoffe" werden sämtliche Werkstoffe zusammengefasst, die im Ausgangszustand fest sind und aus losen, d.h. nicht verbundenen, Pulverpartikeln bestehen. Pulverförmige Werkstoffe können aus einem Werkstoffpulver bestehen oder als Gemisch aus verschiedenen Werkstoffpulvern zusammengesetzt sein.

In einer bevorzugten Weiterentwicklung des Verfahrens werden im Bauteil Setzbereiche für Einsatzelemente definiert und lose Pulverpartikel des pulverförmigen Werkstoffs, die die Setzbereiche umgeben, werden miteinander verbunden. Die Pulverpartikel des pulverförmigen Werkstoffs, die die Setzbereiche umgeben, werden miteinander verbunden und grenzen die Setzbereiche für die Einsatzelemente vom übrigen Bauteil ab. Um Einsatzelemente in ein schichtweise gefertigtes Bauteil zu integrieren, werden für die Einsatzelemente Setzvolumina definiert, die wie das Bauteil in einen Setzbereich oder in mehrere aufeinander folgende Setzbereiche zerlegt werden. Um nur die losen Pulverpartikel im Bereich der Setzvolumina entfernen zu können, werden die Setzvolumina durch Kavitäten oder geschlossene Stützstrukturen vom umgebenden Bauteil abgegrenzt. Die miteinander verbundenen Pulverpartikel des pulverförmigen Werkstoffs bilden Kavitäten oder geschlossene Stützstrukturen und ermöglichen zumindest ein teilweises Entfernen des pulverförmigen Werkstoffs. Die Kavitäten oder geschlossenen Stützstrukturen reduzieren das Risiko, dass die Einsatzelemente beim Auftragen einer weiteren Pulverpartikel des pulverförmigen Werkstoffs verschoben werden und ermöglichen es, die Einsatzelemente mit einer hohen Genauigkeit in das Bauteil zu integrieren.

Unter dem Begriff "Einsatzelemente" werden sämtliche Elemente zusammengefasst, die in ein Bauteil integriert werden können. Dazu gehören u.a. Schneidelemente, Sensorelemente, Werkstofffüllungen und Platzhalteelemente. Unter dem Begriff "Schneidelemente" werden sämtliche Schneidmittel für abrasive Bearbeitungswerkzeuge zusammengefasst. Dazu gehören vor allem einzelne Hartstoffpartikel (Partikel von Hartstoffen), Verbundteile aus mehreren Hartstoffpartikeln und beschichtete oder gekapselte Hartstoffpartikel. Hartstoffe zeichnen sich durch eine besondere Härte aus. Dabei lassen sich Hartstoffe zum einen in natürliche und synthetische Hartstoffe und zum anderen in metallische und nichtmetallische Hartstoffe unterteilen. Zu den natürlichen Hartstoffen gehören u.a. natürliche Diamanten, Korund und andere harte Mineralien und zu den synthetischen Hartstoffen gehören u.a. synthetische Diamanten, hochschmelzende Karbide, Boride, Nitride und Silizide. Zu den metallischen Hartstoffen gehören u.a. die hochschmelzenden Karbide, Boride, Nitride und Silizide der Übergangsmetalle der vierten bis sechsten Gruppe des Periodensystems und zu den nichtmetallischen Hartstoffen gehören u.a. Diamant, Korund, andere harte Mineralien, Siliziumkarbid und Borkarbid.

In einer ersten Variante des Verfahrens werden im Bauteil Kavitäten für die Einsatzelemente schichtweise aufgebaut und die Einsatzelemente werden während der schichtweisen Fertigung innerhalb der Kavitäten angeordnet. Die Einsatzelemente werden in den Kavitäten platziert, die verhindern, dass die Einsatzelemente beim Auftragen einer weiteren Pulverschicht des pulverförmigen Werkstoffs verschoben werden, so dass die definierten Positionen der Einsatzelemente mit einer hohen Genauigkeit während des Schichtaufbaus eingehalten werden können.

Besonders bevorzugt werden für die Querschnittsbereiche des Bauteils, die die Setzbereiche umfassen, neben den Setzbereichen Werkstoffbereiche definiert und für die Querschnittsbereiche des Bauteils, die keine Setzbereiche umfassen, werden Werkstoffbereiche definiert, wobei die losen Pulverpartikel des pulverförmigen Werkstoffs in den Werkstoffbereichen miteinander verbunden werden und die Werkstoffbereiche die Kavitäten für die Einsatzelemente begrenzen. Dadurch, dass die Pulverpartikel des pulverförmigen Werkstoffs in den Werkstoffbereichen miteinander verbunden sind, sind die Setzbereiche für die Einsatzelemente durch die zylinderförmigen Mantelflächen der Werkstoffbereiche begrenzt und die losen Pulverpartikel in den Setzbereichen können aus dem Bauteil entfernt werden. Die zylinderförmigen Mantelflächen der Werkstoffbereiche bilden die Kavitäten und umgeben die Setzbereiche für die Einsatzelemente. In jede Kavität des Bauteils, die die erforderliche Einsatzhöhe aufweist, wird mindestens ein Einsatzelement angeordnet. Dabei können in eine Kavität ein Einsatzelement, mehrere gleiche Einsatzelemente oder verschiedene Einsatzelemente angeordnet werden.

Der Aufbau von Kavitäten im Rahmen der ersten Variante des Verfahrens hat den Vorteil, dass die Pulverpartikel des pulverförmigen Werkstoffs außerhalb der Kavitäten miteinander verbunden sind und somit ein versehentliches Entfernen von pulverförmigem Werkstoff aus den Werkstoffbereichen nicht möglich ist. Allerdings erfordert das vollständige Verbinden der Pulverpartikel in den Werkstoffbereichen einen hohen Fertigungsaufwand und erhöht den Anteil an unerwünschten Zusatzkomponenten, beispielsweise in Form eines Klebemittels oder Bindemittels, im Bauteil. Unerwünschte Zusatzkomponenten in einem als Grünling ausgebildeten Bauteil müssen bei einem nachfolgenden Verdichtungsprozess durch Heißpressen und/oder Sintern entfernt werden. Können die Zusatzkomponenten nicht vollständig entfernt werden, kann die Qualität des verdichteten Bauteils leiden.

Besonders bevorzugt werden lose Pulverpartikel des pulverförmigen Werkstoffs zumindest teilweise aus einer Kavität entfernt, wenn die Kavität eine zum Anordnen der Einsatzelemente erforderliche Einsatzhöhe aufweist. Die erforderliche Einsatzhöhe der Kavitäten ist unter anderem vom Typ und der Größe der Einsatzelemente abhängig. Außerdem kann die erforderliche Einsatzhöhe der Kavitäten für gleiche Einsatzelemente innerhalb des Bauteils verschieden sein und von der räumlichen Platzierung der Einsatzelemente im Bauteil abhängen. In jede Kavität, die die erforderliche Einsatzhöhe aufweist, wird mindestens ein Einsatzelement angeordnet. Dabei können in eine Kavität ein Einsatzelement, mehrere gleiche Einsatzelemente oder verschiedene Einsatzelemente angeordnet werden.

Nachdem der pulverförmige Werkstoff zumindest teilweise aus einer Kavität entfernt wurde, kann die Kavität mit einem Spezialwerkstoff oder einem Klebemittel befüllt werden. Die Verwendung eines Spezialwerkstoffs bietet sich an, wenn das schichtweise gefertigte Bauteil zur Verdichtung einer nachfolgenden Bearbeitung durch Heißpressen und/oder Sintern unterzogen wird und die Einsatzelemente beim Heißpressen und/oder Sintern durch den pulverförmigen Werkstoff beschädigt werden. Die Verwendung eines Klebemittels bietet sich an, wenn Einsatzelemente eine Orientierung aufweisen und in der richtigen Orientierung in der Kavität angeordnet sein sollen.

In einer zweiten Variante des Verfahrens werden im Bauteil geschlossene Stützstrukturen für die Einsatzelemente schichtweise aufgebaut und die Einsatzelemente werden während der schichtweisen Fertigung innerhalb der Stützstrukturen angeordnet. Eine Stützstruktur wird als geschlossen bezeichnet, wenn die Stützstruktur in der Aufbauebene des Bauteils einen geschlossenen Umfang aufweist und der Setzbereich vollumfänglich von der Stützstruktur umgeben ist. Die Einsatzelemente werden in die Stützstrukturen platziert, die verhindern, dass die Einsatzelemente beim Auftragen einer weiteren Pulverschicht des pulverförmigen Werkstoffs verschoben werden, so dass die definierten Positionen der Einsatzelemente mit einer hohen Genauigkeit während des Schichtaufbaus eingehalten werden können. Der Aufbau von geschlossenen Stützstrukturen im Rahmen der zweiten Variante des Verfahrens hat gegenüber der ersten Variante des Verfahrens den Vorteil, dass der Fertigungsaufwand beim Erstellen der Stützstrukturen und der Anteil an unerwünschten Zusatzkomponenten, beispielsweise in Form eines Klebemittels oder Bindemittels, gegenüber Kavitäten in Werkstoffbereichen reduziert ist.

Besonders bevorzugt werden für die Querschnittsbereiche des Bauteils, die die Setzbereiche umfassen, Stützringe definiert, wobei die Stützringe die Setzbereiche umgeben. Die Stützringe bilden die geschlossenen Stützstrukturen für die Einsatzelemente, wobei die Stützstrukturen aus einem Stützring oder mehreren in Aufbaurichtung aufeinanderfolgenden Stützringen gebildet werden. Als Querschnittsformen für die Stützringe eignen sich sämtliche geschlossene Querschnittsformen, wobei die Querschnittsform insbesondere an die Geometrie der Einsatzelemente angepasst wird.

Schichtweise gefertigte Bauteile mit geschlossenen Stützstrukturen für die Einsatzelemente müssen nach dem Schichtaufbau aus der Anlage entnommen werden. Daher muss die Außengeometrie des Bauteils zumindest an der Unterseite und den Seiten abgeschlossen werden, um ein Austreten des pulverförmigen Werkstoffs zu verhindern. Die Querschnittsbereiche des Bauteils umfassen mindestens eine äußere zylinderförmige Mantelfläche, die auch als Außenmantelfläche bezeichnet wird. Bei Bauteilen mit innenliegenden Aussparungen umfassen die Querschnittsbereiche zusätzlich eine oder mehrere innere zylinderförmige Mantelflächen, die auch als Innenmantelflächen bezeichnet werden. Für die Außen- und Innenmantelflächen des Bauteils werden Grenzringe definiert, wobei die Grenzringe der Außenmantelflächen als äußere Grenzringe oder Außenringe und die Grenzringe der Innenmantelflächen als innere Grenzringe oder Innenringe bezeichnet werden. Unter dem Begriff "Grenzring" werden sowohl "äußere Grenzringe" als auch "innere Grenzringe" zusammengefasst. Die äußeren Grenzringe weisen Außengeometrien auf, die den Außenmantelflächen der Querschnittsbereiche entsprechen, und die inneren Grenzringe weisen Innengeometrien auf, die den Innenmantelflächen der Querschnittsbereiche entsprechen.

Besonders bevorzugt werden lose Pulverpartikel des pulverförmigen Werkstoffs zumindest teilweise aus einer Stützstruktur entfernt, wenn die Stützstruktur eine zum Anordnen der Einsatzelemente erforderliche Einsatzhöhe aufweist. Die erforderliche Einsatzhöhe der Stützstrukturen ist unter anderem vom Typ und der Größe der Einsatzelemente abhängig. Außerdem kann die erforderliche Einsatzhöhe der Stützstrukturen für gleiche Einsatzelemente innerhalb des Bauteils verschieden sein und von der räumlichen Platzierung der Einsatzelemente im Bauteil abhängen. In jede Stützstruktur, die die erforderliche Einsatzhöhe aufweist, wird mindestens ein Einsatzelement angeordnet. Dabei können in eine Stützstruktur ein Einsatzelement, mehrere gleiche Einsatzelemente oder verschiedene Einsatzelemente angeordnet werden.

Nachdem der pulverförmige Werkstoff zumindest teilweise aus einer Stützstruktur entfernt wurde, kann die Stützstruktur mit einem Spezialwerkstoff oder einem Klebemittel befüllt werden. Die Verwendung eines Spezialwerkstoffs bietet sich an, wenn das schichtweise gefertigte Bauteil zur Verdichtung einer nachfolgenden Bearbeitung durch Heißpressen und/oder Sintern unterzogen wird und die Einsatzelemente beim Heißpressen und/oder Sintern durch den pulverförmigen Werkstoff beschädigt werden. Die Verwendung eines Klebemittels bietet sich an, wenn Einsatzelemente eine Orientierung aufweisen und in der richtigen Orientierung in der Stützstruktur angeordnet sein sollen.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein erstes Bauteil, das mit Hilfe des erfindungsgemäßen Verfahrens zur schichtweisen Fertigung aus fünf in einer Aufbaurichtung übereinander liegenden zylinderförmigen Querschnittsbereichen hergestellt wird;
- FIGN. 2A-E: die fünf Querschnittsbereiche des ersten Bauteils der FIG. 1, die aus einer zweidimensionalen Querschnittsfläche senkrecht zur Aufbaurichtung und einer Schichtdicke parallel zur Aufbaurichtung bestehen;
- FIGN. 3A, B: einen ersten und zweiten Querschnitt durch das erste Bauteil der FIG. 1 parallel zur Aufbaurichtung entlang der Schnittebenen A-A in den FIGN. 2A-E (FIG. 3A) und entlang der Schnittebenen B-B in den FIGN. 2A-E (FIG. 3B);
- FIGN. 4A-T: die aufeinander folgenden Verfahrensschritte des erfindungsgemäßen Verfahrens zur schichtweisen Fertigung des ersten Bauteils der FIG. 1 mit definiert angeordneten Hartstoffpartikeln;
- FIGN. 5A-E: fünf zylinderförmige Querschnittsbereiche eines zweiten Bauteils, das mit Hilfe des erfindungsgemäßen Verfahrens zur schichtweisen Fertigung eines Bauteils auf einem Substrat aufgebaut wird;
- FIGN. 6A, B: einen ersten und zweiten Querschnitt durch das zweite Bauteil parallel zur Aufbaurichtung entlang der Schnittebenen A-A in den FIGN. 5A-E (FIG. 6A) und entlang der Schnittebenen B-B in den FIGN. 5A-E (FIG. 6B); und
- FIGN. 7A-M: die aufeinander folgenden Verfahrensschritte des erfindungsgemäßen Verfahrens zur schichtweisen Fertigung des zweiten Bauteils mit definiert angeordneten Hartstoffpartikeln.

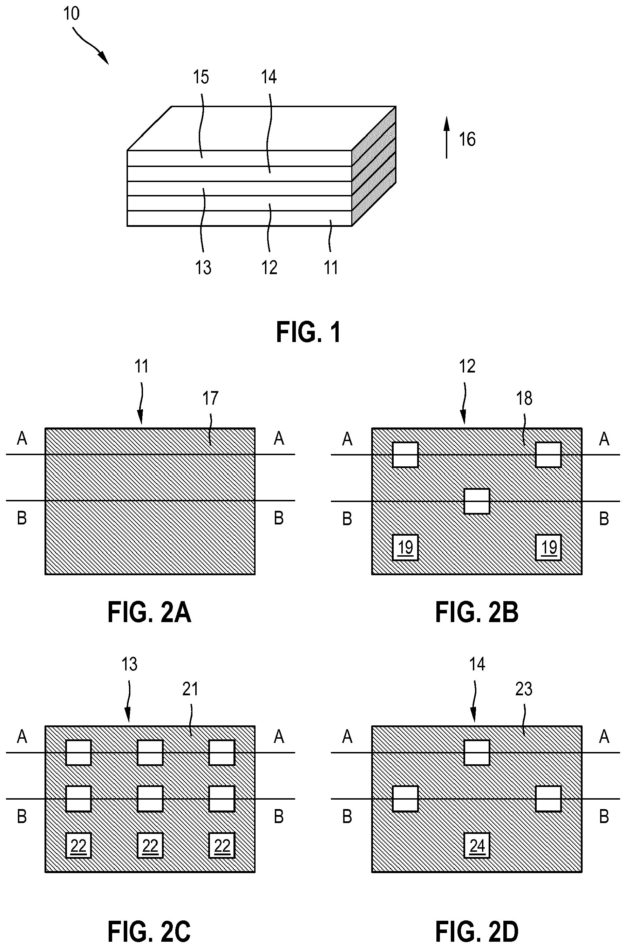

FIG. 1 zeigt ein als Quader ausgebildetes Bauteil **10**, das mit Hilfe des erfindungsgemäßen Verfahrens zur schichtweisen Fertigung eines Bauteils aus pulverförmigem Werkstoff mit definiert angeordneten Einsatzelementen hergestellt wird und im Folgenden als erstes Bauteil 10 bezeichnet wird. Das erste Bauteil 10 wird in einem Schichtaufbau aus fünf übereinander liegenden zylinderförmigen Querschnittsbereichen **11, 12,** 13, 14, 15 hergestellt, die in einer Aufbaurichtung 16 aufeinander gestapelt werden. Die zylinderförmigen Querschnittsbereiche 11-15 weisen parallel zur Aufbaurichtung 16 eine Schichtdicke **dᵢ**, i = 1 bis 5 und senkrecht zur Aufbaurichtung 16 eine zweidimensionale Querschnittsfläche auf. Die Schichtdicken dᵢ, i = 1 bis 5 können einheitlich sein oder die einzelnen Querschnittsbereiche 11-15 weisen unterschiedliche Schichtdicken auf.

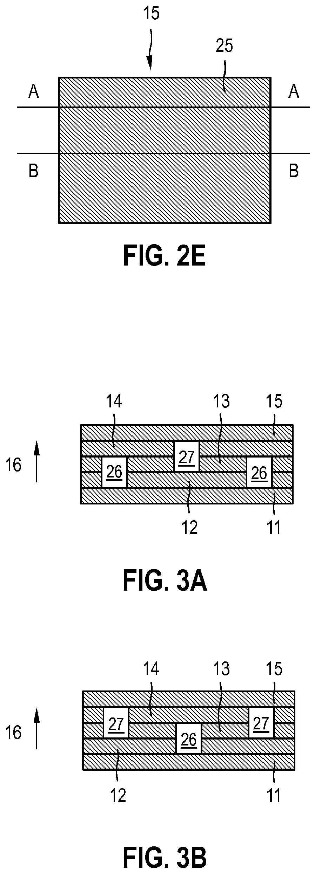

Um das erste Bauteil 10 im Schichtaufbau herstellen zu können, wird der Quader 10 in Aufbaurichtung 16 in die fünf zylinderförmigen Querschnittsbereiche 11-15 zerlegt, die in den **FIGN. 2A-E** dargestellt sind. Dabei zeigt FIG. 2A den ersten Querschnittsbereich 11, FIG. 2B den zweiten Querschnittsbereich 12, FIG. 2C den dritten Querschnittsbereich 13, FIG. 2D den vierten Querschnittsbereich 14 und FIG. 2E den fünften Querschnittsbereich 15. Jeder Querschnittsbereich 11-15 des ersten Bauteils 10 umfasst einen oder mehrere Werkstoffbereiche, die aus pulverförmigem Werkstoff hergestellt werden, und kann einen oder mehrere Setzbereiche aufweisen. Die Setzbereiche bilden Kavitäten für Einsatzelemente, die im ersten Bauteil 10 angeordnet werden sollen. Die Kavitäten können aus einem Setzbereich oder mehreren in Aufbaurichtung 16 aufeinanderfolgenden Setzbereichen bestehen.

Zur Unterscheidung der Werkstoffbereiche und Setzbereiche werden die Werkstoffbereiche des i-ten Querschnittsbereichs als i-te Werkstoffbereiche und die Setzbereiche des i-ten Querschnittsbereichs als i-te Setzbereiche bezeichnet. Der erste Querschnittsbereich 11 umfasst einen ersten Werkstoffbereich **17,** der zweite Querschnittsbereich 12 umfasst einen zweiten Werkstoffbereich **18** und fünf zweite Setzbereiche **19,** der dritte Querschnittsbereich 13 umfasst einen dritten Werkstoffbereich **21** und neun dritte Setzbereiche **22,** der vierte Querschnittsbereich 14 umfasst einen vierten Werkstoffbereich **23** und vier vierte Setzbereiche **24** und der fünfte Querschnittsbereich 15 umfasst einen fünften Werkstoffbereich **25.**

**FIGN. 3A****, B** zeigen einen ersten und zweiten Querschnitt durch das erste Bauteil 10 der FIG. 1 parallel zur Aufbaurichtung 16 entlang der Schnittebenen A-A in den FIGN. 2A-E (FIG. 3A) und entlang der Schnittebenen B-B in den FIGN. 2A-E (FIG. 3B). Die fünf Querschnittsbereiche 11-15 des ersten Bauteils 10 sind in Aufbaurichtung 16 übereinander angeordnet.

Beim Schichtaufbau des ersten Bauteils 10 werden neun Kavitäten aufgebaut, in die Einsatzelemente angeordnet werden. Die neun Kavitäten lassen sich in eine erste Gruppe von fünf ersten Kavitäten **26** und eine zweite Gruppe von vier zweiten Kavitäten **27** unterteilen. Die ersten Kavitäten 26 befindet sich im zweiten und dritten Querschnittsbereich 12, 13 und werden von den zweiten und dritten Setzbereichen 19, 22 gebildet, die zweiten Kavitäten 27 befindet sich im dritten und vierten Querschnittsbereich 13, 14 und werden von den dritten und vierten Setzbereichen 22, 24 gebildet. FIG. 3A zeigt zwei erste Kavitäten 26 und eine zweite Kavität 27 und FIG. 3B zeigt eine erste Kavität 26 und zwei zweite Kavitäten 27.

Im Ausführungsbeispiel des ersten Bauteils 10 weisen die ersten und zweiten Kavitäten 26, 27 die gleiche Querschnittsform und die gleiche Einsatzhöhe auf. Alternativ können die ersten Kavitäten 26 eine erste Querschnittsform und eine erste Einsatzhöhe und die zweiten Kavitäten 27 eine zweite Querschnittsform und eine zweite Einsatzhöhe aufweisen, die voneinander verschieden sind. Unterschiedliche Querschnittsformen und/oder unterschiedliche Einsatzhöhen für die ersten und zweiten Kavitäten bieten sich an, wenn unterschiedliche erste und zweite Einsatzelemente in den ersten und zweiten Kavitäten angeordnet werden.

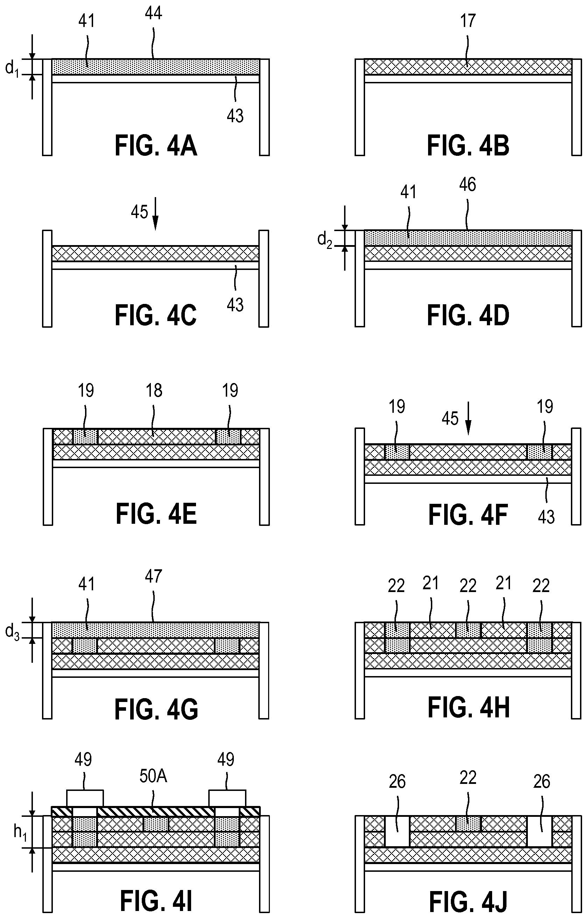

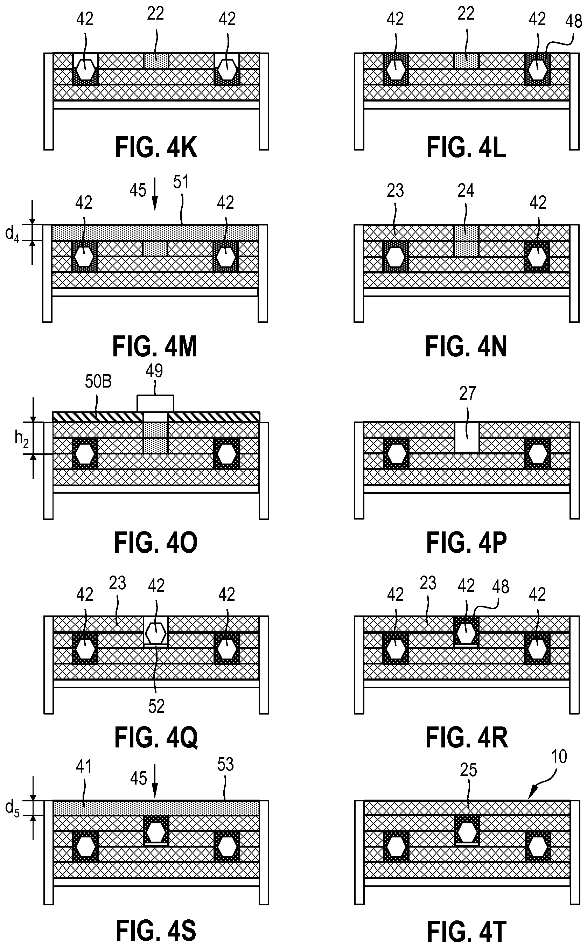

**FIGN. 4A-T** zeigen die aufeinanderfolgenden Verfahrensschritte des erfindungsgemäßen Verfahrens zur schichtweisen Fertigung des ersten Bauteils 10 der FIG. 1 aus pulverförmigem Werkstoff **41** mit definiert angeordneten Einsatzelementen **42.** Das erste Bauteil 10 ist als Grünling ausgebildet und wird in einem nachfolgenden Verdichtungsprozess beispielsweise durch Heißpressen und/oder Sintern zu einem Bearbeitungssegment für ein abrasives Bearbeitungswerkzeug verdichtet. Das erste Bauteil 10 wird aus dem pulverförmigen Werkstoff 41 und Einsatzelementen in Form von Schneidelementen hergestellt, die als einzelne Hartstoffpartikel 42 ausgebildet sind. Die Hartstoffpartikel 42 entstammen einer Mischung von Hartstoffpartikeln, die durch einen minimalen Durchmesser **Dₘᵢₙ** und einen maximalen Durchmesser **Dₘₐₓ** charakterisiert sind, wobei 95 % der Hartstoffpartikel grösser als der minimale Durchmesser Dₘᵢₙ und kleiner als der maximale Durchmesser Dₘₐₓ sind.

Das erste Bauteil 10 wird schichtweise mit Hilfe einer Vorrichtung hergestellt, die eine höhenverstellbare Aufbauebene **43,** eine Pulverzuführung und einen Druckkopf umfasst. Mit Hilfe der Pulverzuführung wird eine erste Pulverschicht **44** des pulverförmigen Werkstoffs 41 mit der ersten Schichtdicke d₁ aufgetragen (FIG. 4A). Der Druckkopf trägt im ersten Werkstoffbereich 17 eine erste Klebeschicht auf, die die losen Pulverpartikel der ersten Pulverschicht 44 im ersten Werkstoffbereich 17 verbindet (FIG. 4B). Die Aufbauebene 43 wird in einer Verstellrichtung **45** parallel zur Aufbaurichtung 16 um die zweite Schichtdicke d₂ abgesenkt (FIG. 4C) und eine zweite Pulverschicht **46** des pulverförmigen Werkstoffs 41 wird mit Hilfe der Pulverzuführung aufgetragen (FIG. 4D). Der Druckkopf trägt im zweiten Werkstoffbereich 18 eine zweite Klebeschicht auf, die die losen Pulverpartikel der zweiten Pulverschicht 46 im zweiten Werkstoffbereich 18 verbindet, wobei die Pulverpartikel in den zweiten Setzbereichen 19 nicht verbunden werden (FIG. 4E). Die Aufbauebene 43 wird in der Verstellrichtung 45 um die dritte Schichtdicke d₃ abgesenkt (FIG. 4F) und eine dritte Pulverschicht **47** des pulverförmigen Werkstoffs 41 wird mit Hilfe der Pulverzuführung aufgetragen (FIG. 4G). Der Druckkopf trägt im dritten Werkstoffbereich 21 eine dritte Klebeschicht auf, die die losen Pulverpartikel der dritten Pulverschicht 47 im dritten Werkstoffbereich 21 verbindet, wobei die Pulverpartikel in den dritten Setzbereichen 22 nicht verbunden werden (FIG. 4H).

Die Einsatzhöhe der ersten Kavitäten 26 ist nach dem Auftragen der dritten Pulver- und Klebeschichten erreicht und die Hartstoffpartikel 42 können in den ersten Kavitäten 26 angeordnet werden. Die Einsatzhöhe der ersten Kavitäten 26 wird im Folgenden als erste Einsatzhöhe **h₁** bezeichnet. Im Ausführungsbeispiel ist die erste Einsatzhöhe h₁ grösser als der maximale Durchmesser Dₘₐₓ der Hartstoffpartikel 42. Eine erste Einsatzhöhe h₁, die grösser als der maximale Durchmesser Dₘₐₓ der Hartstoffpartikel 42 ist, hat den Vorteil, dass die platzierten Hartstoffpartikel 42 nahezu vollständig in den ersten Kavitäten 26 angeordnet sind und die Gefahr, dass Hartstoffpartikel 42 beim Auftragen einer weiteren Pulverschicht verschoben werden, stark reduziert ist. Außerdem können die Hartstoffpartikel 42 von einem Spezialwerkstoff, der von dem pulverförmigen Werkstoff 41 verschieden ist, umgeben werden. Durch den Spezialwerkstoff können die Hartstoffpartikel 42 in einem folgenden Verdichtungsprozess beispielsweise durch Heißpressen oder Sintern vor Beschädigungen durch chemische Reaktionen mit dem pulverförmigen Werkstoff 41 geschützt werden. Als Spezialwerkstoffe für Hartstoffpartikel 42 in Form von Diamantpartikeln eignen sich beispielsweise Kobaltpulver oder Bronzepulver.

Bei der gezeigten Variante des erfindungsgemäßen Verfahrens werden die Hartstoffpartikel 42 von einem Spezialwerkstoff **48** umgeben. Zunächst werden die losen Pulverpartikel des pulverförmigen Werkstoffes 41 im Bereich der ersten Kavitäten 26 mit Hilfe einer Absaugeinrichtung **49** abgesaugt (FIG. 4I). Dazu wird eine erste Schablone **50A** auf dem Schichtaufbau platziert, die die ersten Kavitäten 26 freigibt, und die losen Pulverpartikel des pulverförmigen Werkstoffs 41 werden aus den ersten Kavitäten 26 beispielsweise durch Absaugen entfernt. Nach dem Absaugen des pulverförmigen Werkstoffs 41 werden die ersten Kavitäten 26 teilweise mit dem Spezialwerkstoff 48 befüllt (FIG. 4J), die Hartstoffpartikel 42 werden in die ersten Kavitäten 26 platziert (FIG. 4K) und die ersten Kavitäten 26 werden anschließend vollständig mit dem Spezialwerkstoff 48 befüllt (FIG. 4L). Diese Variante hat den Vorteil, dass die Hartstoffpartikel 42 vollständig von dem Spezialwerkstoff 48 umgeben sind und die Gefahr, dass die Hartstoffpartikel 42 beim Heißpressen und/oder Sintern durch eine chemische Verbindung mit den pulverförmigen Werkstoff 41 beschädigt werden, so weit wie möglich reduziert ist.

Nachdem die ersten Kavitäten 26 vollständig mit dem Spezialwerkstoff 48 befüllt sind, wird der Schichtaufbau des ersten Bauteils 10 fortgesetzt. Die Aufbauebene 43 wird in Verstellrichtung 45 um die vierte Schichtdicke d₄ abgesenkt und eine vierte Pulverschicht **51** des pulverförmigen Werkstoffs 41 wird mit Hilfe der Pulverzuführung aufgetragen (FIG. 4M). Der Druckkopf trägt im vierten Werkstoffbereich 23 eine vierte Klebeschicht auf, die die losen Pulverpartikel der vierten Pulverschicht 51 im vierten Werkstoffbereich 23 verbindet, wobei die Pulverpartikel in den vierten Setzbereichen 24 nicht verbunden werden (FIG. 4N).

Die Einsatzhöhe der zweiten Kavitäten 27 ist nach dem Auftragen der vierten Pulver- und Klebeschicht erreicht und die Schneidelemente 42 können in den zweiten Kavitäten 27 angeordnet werden. Die Einsatzhöhe der zweiten Kavitäten 27 wird im Folgenden als zweite Einsatzhöhe **h₂** bezeichnet, wobei die zweite Einsatzhöhe h₂ grösser als der maximale Durchmesser Dₘₐₓ der Hartstoffpartikel 42 ist. Um die Hartstoffpartikel 42, die in den zweiten Kavitäten 27 angeordnet werden, vor Beschädigungen durch chemische Reaktionen mit dem pulverförmigen Werkstoff 41 zu schützen, werden die Hartstoffpartikel 42 der zweiten Kavitäten 27 wie die Hartstoffpartikel 42 der ersten Kavitäten 26 in den Spezialwerkstoff 48 eingebettet. Das Befüllen der zweiten Kavitäten 27 mit den Hartstoffpartikeln 42 und dem Spezialwerkstoff 48 kann analog zu dem in den FIGN. 4J, K, L gezeigten zweiteiligen Füllverfahren der ersten Kavitäten 26 erfolgen, bei dem ein erster Teil des Spezialwerkstoffs 48 vor dem Anordnen der Hartstoffpartikel 42 und ein zweiter Teil des Spezialwerkstoffs 48 nach dem Anordnen der Hartstoffpartikel 42 eingefüllt wird.

Um den Aufwand bei der schichtweisen Fertigung des ersten Bauteils 10 zu reduzieren, kann das zweiteilige Füllverfahren der ersten und zweiten Kavitäten 26, 27 mit dem Spezialwerkstoff 48 vereinfacht werden. Die Alternative sieht vor, dass die Hartstoffpartikel 42 nach dem Absaugen der losen Pulverpartikel in den Kavitäten 26, 27 platziert werden und die Kavitäten 26, 27 nach dem Anordnen der Hartstoffpartikel 42 mit dem Spezialwerkstoff 48 befüllt werden. Am Beispiel der zweiten Kavitäten 27 wird die Alternative, die als einteiliges Füllverfahren bezeichnet wird, beschrieben. Bei der Herstellung von Bauteilen wird in der Regel das einteilige oder zweiteilige Füllverfahren für den Spezialwerkstoff 48 eingesetzt. Das einteilige Füllverfahren wird am Beispiel der zweiten Kavitäten 27 beschrieben, kann aber ebenso beim Befüllen der ersten Kavitäten 26 mit Spezialwerkstoff 48 angewendet werden.

Die losen Pulverpartikel werden im Bereich der zweiten Kavitäten 27 mit Hilfe der Absaugeinrichtung 49 und einer zweiten Schablone **50B,** die die zweiten Kavitäten 27 freigibt, abgesaugt (FIG. 4O). Um die Orientierung der Hartstoffpartikel 42 in den zweiten Kavitäten 27 zu gewährleisten, kann ein Klebemittel **52** verwendet werden, dass die Hartstoffpartikel 42 befestigt. Die Verwendung des Klebemittels 52 hat den Vorteil, dass die Orientierungen und Positionen der Hartstoffpartikel 42 beim Auftragen einer weiteren Werkstoffschicht oder eines Spezialwerkstoffs nicht verändert werden. Die Eigenschaften des verwendeten Klebemittels 52 werden an den pulverförmigen Werkstoff 41, die Hartstoffpartikel 42 und/oder den Spezialwerkstoff 48 angepasst. Die zweiten Kavitäten 27 werden mit dem Klebemittel 52 befüllt, die Hartstoffpartikel 42 werden in das Klebemittel 52 platziert (FIG. 4Q), solange das Klebemittel 52 noch nicht ausgehärtet ist, und die zweiten Kavitäten 27 werden nach dem Aushärten des Klebemittels 52 mit dem Spezialwerkstoff 48 befüllt (FIG. 4R). Beim beschriebenen einteiligen Füllverfahren werden zunächst die Einsatzelemente 42 in den zweiten Kavitäten 27 angeordnet und die zweiten Kavitäten 27 werden anschließend mit Spezialwerkstoff 48 befüllt. Alternativ kann beim einteiligen Füllverfahren zunächst der Spezialwerkstoff 48 in die zweiten Kavitäten 27 eingefüllt werden und anschließend werden die Einsatzelemente 42 in den Spezialwerkstoff 48 platziert.

Nachdem die zweiten Kavitäten 27 mit dem Spezialwerkstoff 48 befüllt sind, wird der Schichtaufbau des ersten Bauteils 10 fortgesetzt. Die Aufbauebene 43 wird in Verstellrichtung 45 um die fünfte Schichtdicke d₅ abgesenkt (FIG. 4R) und eine fünfte Pulverschicht 53 des pulverförmigen Werkstoffs 41 wird mit Hilfe der Pulverzuführung auf die Aufbauebene 43 aufgetragen (FIG. 4S). Der Druckkopf trägt im fünften Werkstoffbereich 25 eine fünfte Klebeschicht auf, die die losen Pulverpartikel der fünften Pulverschicht 53 im fünften Werkstoffbereich 25 verbindet (FIG. 4T). Nach dem Verbinden der losen Pulverpartikel im fünften Werkstoffbereich 25 ist der Schichtaufbau des ersten Bauteils 10 abgeschlossen. Das erste Bauteil 10 wird in einem nachfolgenden Verdichtungsprozess, beispielsweise durch Heißpressen und/oder Sintern, zu einem Bearbeitungssegment für ein abrasives Bearbeitungswerkzeug verdichtet.

Das erste Bauteil 10 wird schichtweise aus fünf Werkstoffbereichen 17, 18, 21, 23, 25 mit dem gleichen pulverförmigen Werkstoff 41 hergestellt. Alternativ können die Werkstoffbereiche des ersten Bauteils 10 aus unterschiedlichen pulverförmigen Werkstoffen 41 hergestellt werden. Bei Bauteilen, die zu Bearbeitungssegmenten für abrasive Bearbeitungswerkzeuge weiterverarbeitet werden, kann beispielsweise für den ersten Werkstoffbereich ein erster pulverförmiger Werkstoff und für die weiteren Werkstoffbereiche ein zweiter pulverförmiger Werkstoff verwendet werden, wobei die Eigenschaften des ersten pulverförmigen Werkstoffes im Hinblick auf die Verbindung der Bearbeitungssegmente mit dem Grundkörper und die Eigenschaften des zweiten pulverförmigen Werkstoffes im Hinblick auf die mechanische Anbindung der Schneidelemente 42 ausgewählt werden. Wenn die Bearbeitungssegmente und der Grundkörper verschweißt werden sollen, wird ein schweißbarer erster pulverförmiger Werkstoff ausgewählt.

Beim ersten Bauteil 10 werden die Einsatzelemente 42 in den Spezialwerkstoff 48 eingebettet, wobei das Befüllen der ersten und zweiten Kavitäten 26, 27 in einem einteiligen oder zweiteiligen Füllverfahren erfolgt. Die Einsatzelemente 42 müssen nicht in den Spezialwerkstoff 48 eingebettet werden. Alternativ können die Einsatzelemente 42 in den ersten und zweiten Kavitäten 26, 27 in den pulverförmigen Werkstoff 41 platziert werden, wobei der pulverförmige Werkstoff 41 in diesem Fall nur teilweise aus den ersten und zweiten Kavitäten 26, 27 entfernt wird. Die Verwendung eines Spezialwerkstoffs 48 bietet sich an, wenn das erste Bauteil 10 zur Verdichtung einer nachfolgenden Bearbeitung durch Heißpressen und/oder Sintern unterzogen wird und die Einsatzelemente 42 beim Heißpressen und/oder Sintern durch den verwendeten pulverförmigen Werkstoff 41 beschädigt werden. Der Spezialwerkstoff 48 ist so ausgewählt, dass er eine chemische Verbindung mit dem pulverförmigen Werkstoff 41 bildet und die Einsatzelemente 42 mechanisch bindet.

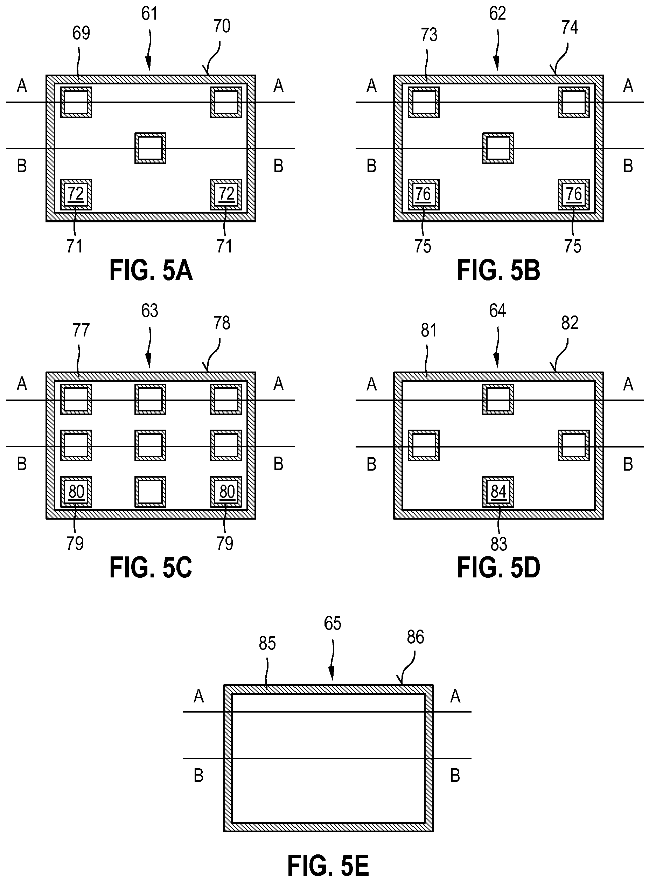

**FIGN. 5A-E** zeigen ein weiteres Bauteil **60,** das als Quader ausgebildet ist und mit Hilfe des erfindungsgemäßen Verfahrens zur schichtweisen Fertigung eines Bauteils aus fünf übereinander liegenden zylinderförmigen Querschnittsbereichen **61, 62, 63, 64, 65** in einer Aufbaurichtung **66** aufgebaut wird. Dabei zeigt FIG. 5A den ersten Querschnittsbereich 61, FIG. 5B den zweiten Querschnittsbereich 62, FIG. 5C den dritten Querschnittsbereich 63, FIG. 5D den vierten Querschnittsbereich 64 und FIG. 5E den fünften Querschnittsbereich 65.

Das Bauteil 60 wird aus einem pulverförmigen Werkstoff **67** und Einsatzelementen in Form von Schneidelementen hergestellt, die als einzelne Hartstoffpartikel 42 ausgebildet sind, und wird im Folgenden als zweites Bauteil 60 bezeichnet. Die Einsatzelemente 42 sind an definierten Positionen im zweiten Bauteil 60 angeordnet, wobei die Verteilung der Einsatzelemente 42 für das erste und zweite Bauteil 10, 60 übereinstimmen. Während der erste Querschnittsbereich 11 beim ersten Bauteil 10 die Unterseite bildet, wird das zweite Bauteil 60 auf einem Substrat **68** als Unterlage aufgebaut. Das Substrat 68 ist beispielsweise eine dünne Metallplatte, die in einem nachfolgenden Bearbeitungsprozess mit dem Grundkörper eines abrasiven Bearbeitungswerkzeuges verbunden wird.

Der erste Querschnittsbereich 61 umfasst einen ersten Außenring **69** mit einer ersten Außenmantelfläche **70** und erste Stützringe **71,** die erste Setzbereiche **72** umgeben. Der zweite Querschnittsbereich 62 umfasst einen zweiten Außenring **73** mit einer zweiten Außenmantelfläche **74** und zweite Stützringe **75,** die zweite Setzbereiche **76** umgeben. Der dritte Querschnittsbereich 63 umfasst einen dritten Außenring 77 mit einer dritten Außenmantelfläche 78 und dritte Stützringe 79, die dritte Setzbereiche 80 umgeben. Der vierte Querschnittsbereich 64 umfasst einen vierten Außenring 81 mit einer vierten Außenmantelfläche 82 und vierte Stützringe 83, die vierte Setzbereiche 84 umgeben. Der fünfte Querschnittsbereich 65 umfasst einen fünften Außenring 85 mit einer fünften Außenmantelfläche 86.

Die Außenringe 69, 73, 77, 81, 85 der Querschnittsbereiche 61-65 sind in Form eines Rechteckzylinders aufgebaut und grenzen das zweite Bauteil 60 von dem umgebenden pulverförmigen Werkstoff 67 ab. Im Ausführungsbeispiel sind die Setzbereiche 72, 76, 80, 84 quadratisch ausgebildet und von quadratischen Stützringen 71, 75, 79, 83 umgeben. Anstelle der geschlossenen quadratischen Stützringe 71, 75, 79, 83 können andere geschlossene Querschnittsformen für die Stützringe verwendet werden.

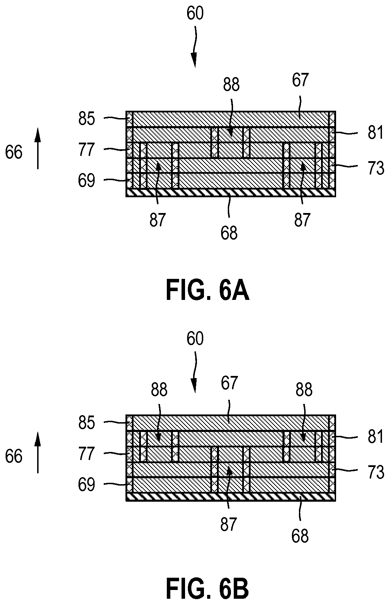

**FIGN. 6A****, B** zeigen einen ersten und zweiten Querschnitt durch das zweite Bauteil 60 parallel zur Aufbaurichtung 66 entlang der Schnittebenen A-A in den FIGN. 5A-E (FIG. 6A) und entlang der Schnittebenen B-B in den FIGN. 5A-E (FIG. 6B). Die fünf Querschnittsbereiche 61-65 des zweiten Bauteils 60 sind in Aufbaurichtung 66 übereinander angeordnet.

Beim Schichtaufbau des zweiten Bauteils 60 wird eine Außengeometrie erzeugt, die ein Austreten von pulverförmigem Werkstoff 67 aus dem zweiten Bauteil 60 verhindert. Die Außengeometrie des zweiten Bauteils 60 wird von dem Substrat 68 und den Außenringen 69, 73, 77, 81, 85 gebildet. Das Substrat 68 wird mit dem ersten Außenring 69 verbunden, der erste Außenring 69 wird mit dem zweiten Außenring 73 verbunden, der zweite Außenring 73 wird mit dem dritten Außenring 77 verbunden, der dritte Außenring 77 wird mit dem vierten Außenring 81 verbunden und der vierte Außenring 81 wird mit dem fünften Außenring 85 verbunden.

Das zweite Bauteil 60 weist fünf erste Stützstrukturen **87** und vier zweite Stützstrukturen **88** auf. Die ersten Stützstrukturen 87 werden von den ersten, zweiten und dritten Stützringen 71, 75, 79 aufgebaut und weisen eine erste Einsatzhöhe **h₁** auf. Die zweiten Stützstrukturen 88 werden von den ersten, zweiten, dritten und vierten Stützringen 71, 75, 79, 83 aufgebaut und weisen eine zweite Einsatzhöhe **h₂** auf. Die ersten und zweiten Stützstrukturen 87, 88 sind mit dem Substrat 68 verbunden und dadurch sicher im zweiten Bauteil 60 fixiert. Zum Aufbau der ersten Stützstrukturen 87 werden die ersten Stützringe 71 mit dem Substrat 68 verbunden, die zweiten Stützringe 75 werden mit den ersten Stützringen 71 verbunden und die dritten Stützringe 79 werden mit den zweiten Stützringen 75 verbunden. Zum Aufbau der zweiten Stützstrukturen 88 werden die ersten Stützringe 71 mit dem Substrat 68 verbunden, die zweiten Stützringe 75 werden mit den ersten Stützringen 71 verbunden, die dritten Stützringe 79 werden mit den zweiten Stützringen 75 verbunden und die vierten Stützringe 83 werden mit den dritten Stützringen 79 verbunden.

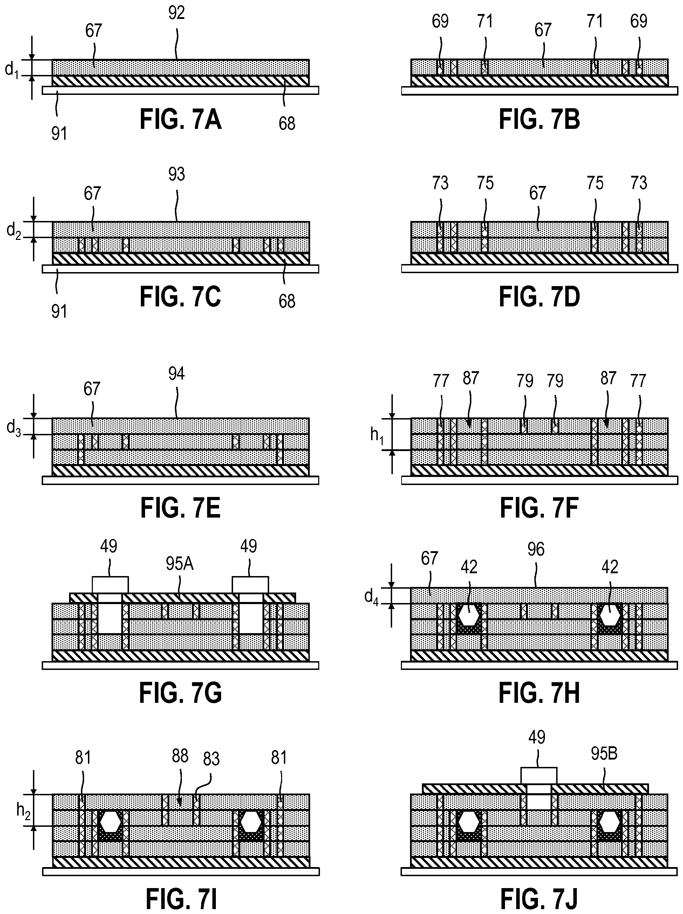

**FIGN. 7A-M** zeigen die aufeinanderfolgenden Verfahrensschritte des erfindungsgemäßen Verfahrens zur schichtweisen Fertigung des zweiten Bauteils 60 aus pulverförmigem Werkstoff 67 mit definiert angeordneten Einsatzelementen, die als einzelne Hartstoffpartikel 42 ausgebildet sind. Das zweite Bauteil 60 wird in einem nachfolgenden Verdichtungsprozess beispielsweise durch Heißpressen und/oder Sintern zu einem Bearbeitungssegment für ein abrasives Bearbeitungswerkzeug verdichtet.

Das zweite Bauteil 60 wird schichtweise mit Hilfe einer Vorrichtung hergestellt, die eine Aufbauebene **91,** eine Pulverzuführung und einen Druckkopf umfasst. Mit Hilfe der Pulverzuführung wird eine erste Pulverschicht **92** des pulverförmigen Werkstoffs 67 mit der ersten Schichtdicke d₁ aufgetragen (FIG. 7A). Der Druckkopf trägt im Bereich des ersten Außenrings 69 und der ersten Stützringe 71 Kleber auf, der die losen Pulverpartikel des pulverförmigen Werkstoffs 67 zum ersten Außenring 69 und den ersten Stützringen 71 verbindet (FIG. 7B).

Mit Hilfe der Pulverzuführung wird eine zweite Pulverschicht **93** des pulverförmigen Werkstoffs 67 mit der zweiten Schichtdicke d₂ aufgetragen (FIG. 7C). Der Druckkopf trägt im Bereich des zweiten Außenrings 73 und der zweiten Stützringe 75 Kleber auf, der die losen Pulverpartikel des pulverförmigen Werkstoffs 67 zum zweiten Außenring 73 und den zweiten Stützringen 75 verbindet (FIG. 7D). Mit Hilfe der Pulverzuführung wird eine dritte Pulverschicht **94** des pulverförmigen Werkstoffs 67 mit der dritten Schichtdicke d₃ aufgetragen (FIG. 7E). Der Druckkopf trägt im Bereich des dritten Außenrings 77 und der dritten Stützringe 79 Kleber auf, der lose Pulverpartikel des pulverförmigen Werkstoffs 67 zum dritten Außenring 77 und den dritten Stützringen 79 verbindet (FIG. 7F).

Die erste Einsatzhöhe h₁ der ersten Stützstrukturen 87 ist nach dem Fertigen des dritten Querschnittsbereichs 63 erreicht und die Hartstoffpartikel 42 können in den ersten Stützstrukturen 87 angeordnet werden. Zunächst werden die losen Pulverpartikel des pulverförmigen Werkstoffs 67 im Bereich der ersten Stützstrukturen 87 mit Hilfe der Absaugeinrichtung 49 abgesaugt (FIG. 7G). Dazu wird eine erste Schablone **95A** auf dem Schichtaufbau platziert, die die ersten Stützstrukturen 87 freigibt, und die losen Pulverpartikel des pulverförmigen Werkstoffs 67 werden mittels der Absaugeinrichtung 49 aus den ersten Stützstrukturen 87 entfernt. Über die Ansaugkraft der Absaugeinrichtung 49 kann die Absaughöhe eingestellt werden.

Nach dem Absaugen des pulverförmigen Werkstoffs 67 werden die ersten Stützstrukturen 87 mit dem Spezialwerkstoff 48 befüllt, die Hartstoffpartikel 42 werden innerhalb der ersten Stützstrukturen 87 angeordnet und mit Hilfe der Pulverzuführung wird eine vierte Pulverschicht **96** des pulverförmigen Werkstoffs 67 mit der vierten Schichtdicke d₄ aufgetragen (FIG. 7H). Der Druckkopf trägt im Bereich des vierten Außenrings 81 und der vierten Stützringe 83 Kleber auf, der lose Pulverpartikel des pulverförmigen Werkstoffs 67 zum vierten Außenring 81 und den vierten Stützringen 83 verbindet (FIG. 7I).

Die zweite Einsatzhöhe h₂ der zweiten Stützstrukturen 88 ist nach dem Fertigen des vierten Querschnittsbereichs 64 erreicht und die Hartstoffpartikel 42 können in den zweiten Stützstrukturen 88 angeordnet werden. Zunächst werden die losen Pulverpartikel des pulverförmigen Werkstoffs 67 im Bereich der zweiten Stützstrukturen 88 mit Hilfe der Absaugeinrichtung 49 abgesaugt (FIG. 7J). Dazu wird eine zweite Schablone **95B** auf dem Schichtaufbau platziert, die die zweiten Stützstrukturen 88 freigibt, und die losen Pulverpartikel des pulverförmigen Werkstoffs 67 werden mittels der Absaugeinrichtung 49 teilweise aus den zweiten Stützstrukturen 88 entfernt. Über die Ansaugkraft der Absaugeinrichtung 49 kann die Absaughöhe eingestellt werden. Im Ausführungsbeispiel wird der pulverförmige Werkstoff 67 über die halbe zweite Einsatzhöhe h₂ abgesaugt und ca. 50 % des pulverförmigen Werkstoffs 67 verbleiben in den zweiten Stützstrukturen 88.

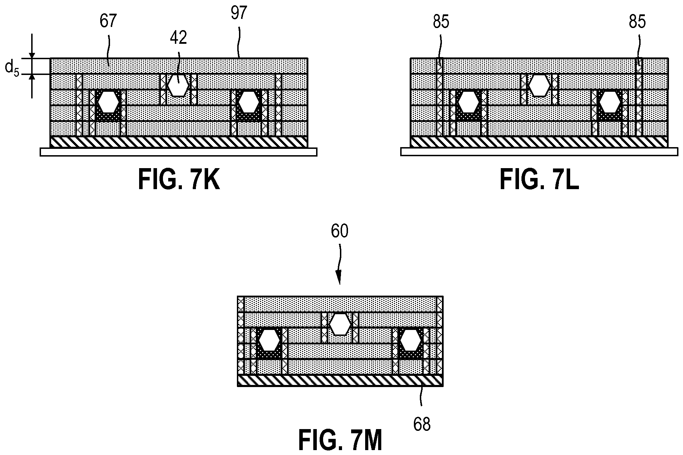

Nach dem teilweisen Absaugen des pulverförmigen Werkstoffs 67 werden die Hartstoffpartikel 42 innerhalb der zweiten Stützstrukturen 88 angeordnet und mit Hilfe der Pulverzuführung wird eine fünfte Pulverschicht **97** des pulverförmigen Werkstoffs 67 mit der fünften Schichtdicke d₅ aufgetragen (FIG. 7K). Der Druckkopf trägt im Bereich des fünften Außenrings 85 Kleber auf, der lose Pulverpartikel des pulverförmigen Werkstoffs 67 zum fünften Außenring 85 verbindet (FIG. 7L). FIG. 7M zeigt das aus dem pulverförmigen Werkstoff 67 schichtweise hergestellte zweite Bauteil 60 mit mehreren definiert angeordneten Einsatzelementen 42.

Das zweite Bauteil 60 wird schichtweise aus den fünf Pulverschichten 92, 93, 94, 96, 97 mit dem gleichen pulverförmigen Werkstoff 67 hergestellt. Alternativ können die fünf Pulverschichten 92, 93, 94, 96, 97 des zweiten Bauteils 60 aus unterschiedlichen pulverförmigen Werkstoffen 67 hergestellt werden. Bei Bauteilen, die zu Bearbeitungssegmenten für abrasive Bearbeitungswerkzeuge weiterverarbeitet werden, kann beispielsweise für die erste Pulverschicht 92 ein erster pulverförmiger Werkstoff und für die weiteren Pulverschichten 93, 94, 96, 97 ein zweiter pulverförmiger Werkstoff verwendet werden, wobei die Eigenschaften des ersten pulverförmigen Werkstoffes im Hinblick auf die Verbindung der Bearbeitungssegmente mit dem Grundkörper und die Eigenschaften des zweiten pulverförmigen Werkstoffs im Hinblick auf die mechanische Anbindung der Einsatzelemente 42 ausgewählt werden. Wenn die Bearbeitungssegmente mit dem Grundkörper verschweißt werden sollen, wird ein schweißbarer erster pulverförmiger Werkstoff ausgewählt.

Die Außengeometrie des zweiten Bauteils 60 ist im fünften Querschnittsbereich 65 nach oben offen ausgebildet, so dass das zweite Bauteil 60 für einen nachfolgenden Verdichtungsprozess aufrecht transportiert werden muss. Um das zweite Bauteil 60 auch im fünften Querschnittsbereich 65 nach außen abzugrenzen, kann der fünfte Querschnittsbereich 65 alternativ ein Deckelement bilden, das mit dem vierten Außenring 81 verbunden wird. Dazu trägt der Druckkopf im fünften Querschnittsbereich 65 eine Klebeschicht auf, die die losen Pulverpartikel des pulverförmigen Werkstoffs 67 zum Deckelement verbindet.

Die ersten und zweiten Stützstrukturen 87, 88 weisen geschlossene Querschnittsformen auf, sind aber nach unten offen ausgebildet. Um zu verhindern, dass die Absaugeinrichtung 49 zu viel pulverförmigen Werkstoff 67 aus den ersten und zweiten Stützstrukturen 87, 88 absaugt, wird die Absaugkraft der Absaugeinrichtung 49 entsprechend eingestellt. Alternativ können die ersten und zweiten Stützstrukturen 87, 88 an ihrer Unterseite eine Bodenfläche aufweisen, die die ersten und zweiten Stützstrukturen 87, 88 vom umgebenden pulverförmigen Werkstoff 67 abgrenzt.

## Patentansprüche

1. Verfahren zur schichtweisen Fertigung eines Bauteils (10; 60) aus pulverförmigem Werkstoff (41; 67) mit losen Pulverpartikeln basierend auf dreidimensionalen Daten des Bauteils (10; 60), mit den Verfahrensschritten:
▪ das Bauteil (10; 60) wird in einer Aufbaurichtung (16; 66) in N, N ≥ 2 aufeinanderfolgende zylinderförmige Querschnittsbereiche (11, 12, 13, 14, 15; 61, 62, 63, 64, 65) zerlegt, wobei jeder Querschnittsbereich (11, 12, 13, 14, 15; 61, 62, 63, 64, 65) aus einer zweidimensionalen Querschnittsfläche senkrecht zur Aufbaurichtung (16; 66) und einer Schichtdicke (d₁, d₂, d₃, d₄, d₅) parallel zur Aufbaurichtung (16; 66) gebildet wird,
▪ auf eine Aufbauebene (43; 91) senkrecht zur Aufbaurichtung (16; 66) wird eine erste Pulverschicht (44; 92) pulverförmigen Werkstoffs (41; 67) aufgebracht,
▪ die losen Pulverpartikel der ersten Pulverschicht (44; 92) werden im ersten Querschnittsbereich (11; 61) des Bauteils (10; 60) zumindest teilweise miteinander verbunden,
▪ auf die Aufbauebene (43; 91) werden in Aufbaurichtung (16; 66) nacheinander weitere Pulverschichten (46, 47, 51, 53; 93, 94, 96, 97) des pulverförmigen Werkstoffs (41; 67) aufgebracht und
▪ in jeder weiteren Pulverschicht (46, 47, 51, 53; 93, 94, 96, 97) des pulverförmigen Werkstoffs (41; 67) werden die losen Pulverpartikel im jeweiligen Querschnittsbereich (12, 13, 14, 15; 62, 63, 64, 65) des Bauteils (10; 60) zumindest teilweise miteinander und mit dem darunter liegenden Querschnittsbereich (11, 12, 13, 14; 61, 62, 63, 64) des Bauteils (10; 60) verbunden,
**dadurch gekennzeichnet, dass** während der schichtweisen Fertigung des Bauteils (10; 60) lose Pulverpartikel, die innerhalb eines Querschnittsbereichs (11, 12, 13, 14, 15; 61, 62, 63, 64, 65) oder innerhalb mehrerer in Aufbaurichtung (16; 66) aufeinanderfolgender Querschnittsbereiche (11, 12, 13, 14, 15; 61, 62, 63, 64, 65) angeordnet sind, zumindest teilweise aus dem Bauteil (10; 60) entfernt werden.

2. Verfahren nach Anspruch 1, **dadurch gekennzeichnet, dass** im Bauteil (10; 60) Setzbereiche (18, 22, 24; 72, 76, 80, 84) für Einsatzelemente (42) definiert werden und lose Pulverpartikel des pulverförmigen Werkstoffs (41; 67), die die Setzbereiche (19, 22, 24; 72, 76, 80, 84) umgeben, miteinander verbunden werden.

3. Verfahren nach Anspruch 2, **dadurch gekennzeichnet, dass** im Bauteil (10) Kavitäten (26, 27) für die Einsatzelemente (42) schichtweise aufgebaut werden und die Einsatzelemente (42) während der schichtweisen Fertigung innerhalb der Kavitäten (26, 27) angeordnet werden.

4. Verfahren nach Anspruch 3, **dadurch gekennzeichnet, dass** für die Querschnittsbereiche (12, 13, 14) des Bauteils (10), die die Setzbereiche (19, 22, 24) umfassen, neben den Setzbereichen (19, 22, 24) Werkstoffbereiche (18, 21, 23) definiert werden und für die Querschnittsbereiche (11, 15) des Bauteils (10), die keine Setzbereiche (19, 22, 24) umfassen, Werkstoffbereiche (17, 25) definiert werden, wobei die losen Pulverpartikel des pulverförmigen Werkstoffs (41) in den Werkstoffbereichen (17, 18, 21, 23, 25) miteinander verbunden werden und die Werkstoffbereiche (17, 18, 21, 23, 25) die Kavitäten (26, 27) für die Einsatzelemente (42) begrenzen.

5. Verfahren nach einem der Ansprüche 3 bis 4, **dadurch gekennzeichnet, dass** lose Pulverpartikel des pulverförmigen Werkstoffs (41) zumindest teilweise aus einer Kavität (26, 27) entfernt werden, wenn die Kavität (26, 27) eine zum Anordnen der Einsatzelemente (42) erforderliche Einsatzhöhe (h₁, h₂) aufweist.

6. Verfahren nach Anspruch 2, **dadurch gekennzeichnet, dass** im Bauteil (60) geschlossene Stützstrukturen (87, 88) für die Einsatzelemente (42) schichtweise aufgebaut werden und die Einsatzelemente (42) während der schichtweisen Fertigung innerhalb der geschlossenen Stützstrukturen (87, 88) angeordnet werden.

7. Verfahren nach Anspruch 6, **dadurch gekennzeichnet, dass** für die Querschnittsbereiche (61, 62, 63, 64) des Bauteils (60), die die Setzbereiche (72, 76, 80, 84) umfassen, Stützringe (71, 75, 79, 83) definiert werden, wobei die Stützringe (71, 75, 79, 83) die Setzbereiche (72, 76, 80, 84) umgeben.

8. Verfahren nach einem der Ansprüche 6 bis 7, **dadurch gekennzeichnet, dass** lose Pulverpartikel des pulverförmigen Werkstoffs (67) zumindest teilweise aus einer Stützstruktur (87, 88) entfernt werden, wenn die Stützstruktur (87, 88) eine zum Anordnen der Einsatzelemente (42) erforderliche Einsatzhöhe (h₁, h₂) aufweist.
